# EUROPÄISCHE PATENTSCHRIFT

(11) **EP 0 525 243 B1**
(45) Veröffentlichungstag und Bekanntmachung des Hinweises auf die Patenterteilung: **18.09.1996**
(21) Anmeldenummer: 91112908.8
(22) Anmeldetag: 31.07.1991
(51) Int. Cl.: H04M 3/24, H04Q 3/545, G06F 11/32

(54) **Verfahren zur Visualisierung von protokollierten Informationen in einem Kommunikationssystem**
Method for the display of traced information in a communication system
Méthode pour visualiser des informations retracées dans un système de communication

(43) Veröffentlichungstag der Anmeldung: 03.02.1993
(73) Patentinhaber: SIEMENS AKTIENGESELLSCHAFT, 80333 München (DE)
(72) Erfinder: Schallier, Walter, B-9810 Gent (BE)

(56) Entgegenhaltungen:
- EP-A- 0 254 115
- DE-A- 3 921 628
- IEEE GLOBAL TELECOMMUNICATIONS CONFERENCE Bd. 3/3, 26. November 1984, ATLANTA(US) Seiten 1274 - 1276; D.C.NEWKIRK ET AL: 'A HARDWARE-INDEPENDENT TESTING ENVIRONMENT FOR 5ESS SWITCHING SYSTEM SOFTWARE'
- PATENT ABSTRACTS OF JAPAN vol. 14, no. 41 (E-879)(3984) 25. Januar 1990 &JP-A-1 272 287
- TELCOM REPORT. Bd. 8, Nr. 3, Mai 1985, MUNCHEN DE Seiten 184 - 188; ERNST J. FEICHT: 'UBERPRUFUNG UND TEST DER SOFTWARE FUR DAS DIGITALVERMITTLUNGSSYSTEM EWSD'

## Beschreibung

Für die Fehlererkennung und Fehlerlokalisierung in Programmen bzw. Unterprogrammen sind u. a. sogenannte "Trace"-Programme bekannt. Mit Hilfe dieser "Trace"-Programme - im weiteren mit Protokollprogramm bezeichnet - wird der Ablauf eines zu überprüfenden Programmes Schritt für Schritt nachvollzogen und jede hierbei entstehende bzw. übermittelte Information protokolliert. Neben diesen Informationen werden zusätzlich jeweils eine Zeitinformation sowie eine Ursprungs- und Zielinformation und eine den jeweiligen vermittlungstechnischen Zustand anzeigende Information protokolliert. Die Ursprungsinformation repräsentiert jeweils ein Programm, mit dessen Hilfe Informationen gebildet oder an das Informationen übermittelt werden. Durch eine Zielinformation ist das Zielprogramm angegeben, an das Informationen übermittelt werden.

Bei Einsatz derartiger Protokollprogramme in Kommunikationssystemen, wie z. B. in einer Vermittlungsanlage, werden überwiegend vermittlungstechnische Informationen, wie z. B. Verbindungsaufbau- und -abbaumeldungen, protokolliert bzw. aufgezeichnet. Die Protokollprogramme sind überwiegend als betriebstechnische Programme in einem Kommunikationssystem realisiert, wobei diese nicht ständig benutzten Protokollprogramme bei Bedarf von einer üblicherweise durch einen Festspeicher - z. B. Festplatte - gebildeten, peripheren Speichereinrichtung in den Arbeitsspeicher der zentralen Steuereinrichtung des Kommunikationssystems übertragen bzw. "geladen" werden. Während und nach dem einmaligen oder wiederholten Ablauf des bzw. der zu überprüfenden Programms bzw. Programme werden die protokollierten Informationen an eine periphere Speichereinrichtung übermittelt und dort hinterlegt, z. B. auf einer "Floppy Disk". Die hinterlegten, protokollierten Informationen sind anschließend entweder an einer Anzeigeeinrichtung einer dem Kommunikationssystem zugeordneten Bedieneinrichtung oder an einer Anzeigeeinrichtung, z. B. Bildschirm, eines Personal Computers, anzeigbar bzw. visualisierbar.

Aus der Druckschrift IEEE Global Telecommunications Conference, Band 3/3, 26. November 1984, Atlanta (US), Seiten 1274 bis 1276, "A Hardware-Independent Testing Environment for 5ESS Switching System Software" ist ein Kommunikationssystem bekannt, bei dem vermittlungstechnische Informationen, wie beispielsweise Rufstatusnachrichten, über den Ablauf eines vermittlungstechnischen Testprogramms protokolliert und visualisiert werden. Hierbei werden von einer peripheren Testeinrichtung Testsignale an das Kommunikationssystem übermittelt und die im Kommunikationssystem durch die Testinformationen verursachten vermittlungstechnischen Nachrichten bzw. Informationen protokolliert sowie visualisiert. Eine Interpretation der vermittlungstechnischen, protokollierten Informationen ist dabei nicht vorgesehen.

Üblicherweise liegen die zu protokollierenden vermittlungstechnischen Informationen für jeden Programmschritt in kodierter, z. B. binär kodierter, Form vor und werden als Kodewörter aufgezeichnet und anschließend an eine Anzeigeeinrichtung übermittelt und dort angezeigt. Die angezeigten Informationen bedürfen hinsichtlich der Dekodierung, der Zuordnung zu Ursprungs- und Zielprogramm und des Informationsflusses der vermittlungstechnischen Informationen einer zeitaufwendigen Interpretation durch eine Bedienperson, um eine Auswertung der protokollierten Informationen zu erreichen.

Die der Erfindung zugrundeliegende Aufgabe ist darin zu sehen, unter Einbeziehung von Interpretationsaspekten gebildete protokollierte Informationen anzuzeigen. Die Aufgabe wird ausgehend von einem in einem Kommunikationssystem eingesetzten Protokollprogrammodul ("Trace"-Programmodul) gemäß dem Oberbegriff des Patentanspruchs 1 durch dessen kennzeichnende Merkmale gelöst.

Ein wesentlicher Aspekt des erfindungsgemäßen Verfahrens ist darin zu sehen, daß für die Visualisierung diejenigen Kodewörter aus den aufgezeichneten Kodewörtern selektiert werden, die eine vorgegebene Ursprungs- und Zielinformation aufweisen. Durch die Ziel- und Ursprungsinformationen sind die Programmmodule bestimmt, deren protokollierte Programmschritte aus den aufgezeichneten protokollierten Informationen bzw. Kodewörtern zu selektieren sind. Zusätzlich sind diejenigen Kodewörter selektierbar, deren protokollierte Ursprungs- oder Zielinformationen zusammen mit den vorgegebenen Ziel- oder Ursprungsinformationen in den selektierten Kodewörtern protokolliert wurden - Anspruch 2. Hierdurch wird erreicht, daß zusätzliche Kodewörter mit nicht vorgegebenen Ursprungs- oder Zielinformationen selektiert werden, wobei deren Ursprungs- oder Zielinformationen jedoch zusammen mit einer vorgegebenen Ziel- oder Ursprungsinformation in einem selektierten Kodewort festgestellt wurden. Durch diese Maßnahme können zusätzlich die protokollierten Informationen von Programmen bzw. Teilprogrammen selektiert werden, deren zugeordnete Ursprungs- oder Zieladresse nicht vorgegeben ist, jedoch mit Programmen kommunizieren, deren zugeordnete Ursprungs- oder Zielinformation vorgegeben ist.

Die Ursprungs- oder Zielinformationen sind beispielsweise durch eine Eingabetastatur eines Personal Computers oder eieines einem Kommunikationssystem zugeordneten Bedienterminals eingebbar und dort in einer Speichereinrichtung speicherbar.

Ein weiterer wesentlicher Aspekt des erfindungsgemäßen Verfahrens ist darin zu sehen, daß bestimmte, d. h. vorgegebene Terme der selektierten Kodewörter jeweils in eine das jeweilige Ursprungs- oder Zielprogramm repräsentierende, mnemonische Ziel- oder Ursprungsinformation, in eine den vermittlungstechnischen Zustand des Ursprungs- und/oder Zielprogramms repräsentierende, mnemonische Zustandsinformation sowie in eine eine vermittlungstechnische Meldung repräsentierende mnemonische Meldungsinformation umgesetzt wird und durch Auswerten der Ursprungs- und Zielinformationen in einem Kodewort eine den Meldungsfluß anzeigende Richtungsinformation gebildet wird. Die Ziel- und Ursprungsinformationen sowie die Meldungs-, Zustands- und Richtungsinformation und nicht umgesetzte Terminformationen, wie z. B. Zeitinformationen, werden im Sinne einer Visualisierung an eine Anzeigeeinrichtung übermittelt, wobei die Richtungsinformation derart an die Anzeigeeinrichtung gesteuert wird, daß ein interner Meldungsfluß und eine die Übermittlungsrichtung der von der Ursprungsinformation zu der Zielinformation übermittelten Meldungsinformation graphisch angezeigt wird. Durch diese Verfahrensschritte wird erreicht, daß bestimmte kodierte Terme der aufgezeichneten Kodewörter in mnemonische Informationen umgesetzt und angezeigt werden, wobei die mnemonischen Informationen verständlicher und folglich wesentlich einfacher und schneller zu interpretieren sind. Ein Vorteil des erfindungsgemäßen Verfahrens ist darin zu sehen, daß der protokollierte Informationsfluß zwischen den Programmen und zusätzlich innerhalb der Programme durch die graphische Anzeige der Richtungsinformationen verdeutlicht wird und damit sofort erkennbar ist. Hierdurch wird die Auswerte- bzw. Interpretationszeit derart visualisierter protokollierter Informationen erheblich verkürzt.

Nach einer vorteilhaften Weiterbildung des erfindungsgemäßen Verfahrens ist zusätzlich zur Ursprungs- und Zielinformation eine numerische, Teilnehmeranschlüsse des Kommunikationssystems repräsentierende Teilnehmeranschlußinformation vorgebbar - Anspruch 3. Hierdurch wird erreicht, daß die protokollierten Informationen bzw. Kodewörter neben der Selektierkriterien Ursprungs- und Zielinformationen zusätzlich noch teilnehmeranschlußbezogen bzw. portbezogen selektiert werden. Durch diese Maßnahme kann der protokollierte Meldungsfluß für einzelne oder mehrere Teilnehmeranschlüsse bzw. Ports durch mnemonische Informationen visualisiert bzw. angezeigt werden.

Eine Vereinfachung der Interpretation wird gemäß einer weiteren vorteilhaften Ausgestaltung des erfindungsgemäßen Verfahrens zusätzlich dadurch erreicht, daß jeweils gleiche Ursprungs- bzw. Zielinformationen sowie die zugeordneten Zustands- und Meldungsinformationen derart an die Anzeigeeinrichtung gesteuert werden, daß diese spaltenweise angezeigt werden - Anspruch 4. Bei der spaltenweisen Anzeige werden die Richtungsinformationen zwischen den Spalten graphisch angezeigt, wodurch eine weitere, die Interpretation vereinfachende Strukturierung der protokollierten Informationen bewirkt wird.

Das erfindungsgemäße Verfahren ist besonders vorteilhaft durch eine programmgesteuerte Eingangsroutine, Selektionsroutine und Ausgangsroutine realisierbar - Anspruch 5. Überwacht und gesteuert bzw. initialisiert werden diese Routinen durch eine programmgesteuerte Hauptroutine. Durch diese Strukturierung wird die Eingabe, die Selektion und die Ausgabe der Kodewörter weitgehend unabhängig voneinander durchgeführt.

Im folgenden wird das erfindungsgemäße Verfahren anhand von drei zeichnerischen Darstellungen näher erläutert.

Dabei zeigen
- FIG 1: die Softwarestruktur eines das erfindungsgemäße Verfahren realisierenden Programmes,
- FIG 2: anhand eines Ablaufdiagrammes das erfindungsgemäße Verfahren, sowie
- FIG 3: bei einem Verbindungsaufbau protokollierte und nach dem erfindungsgemäßen Verfahren umgesetzte und an einer Anzeigeeinrichtung visualisierte Informationen.

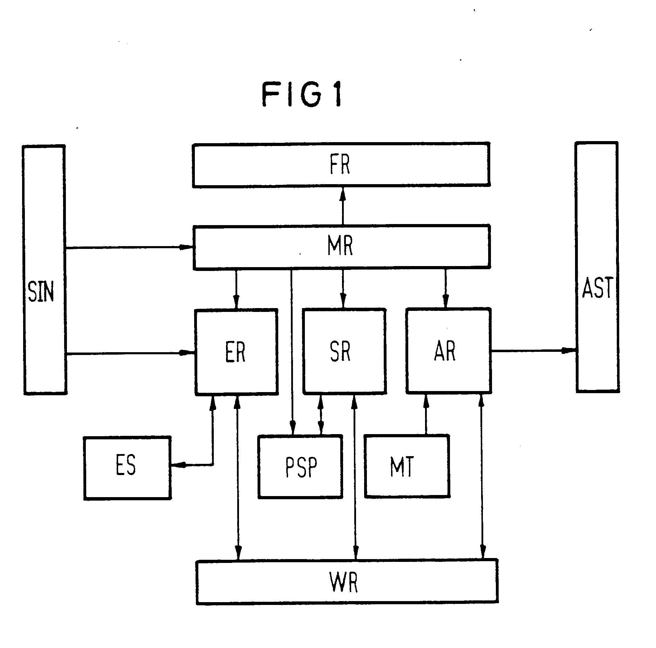

FIG 1 zeigt die Programmstruktur eines das erfindungsgemäße Verfahren realisierenden Programmes. Eine Hauptroutine MR steuert und überwacht das Programm. Mit Hilfe dieser Hauptroutine MR wird eine Ein- und Ausgangsdatei, in denen die Kodewörter jeweils hinterlegt sind bzw. werden, eröffnet sowie die Überprüfung der Eingangsparameter durchgeführt. Des weiteren werden durch die Hauptroutine MR die eingegebenen Ursprungs- und Zielinformationen - für das Ausführungsbeispiel sei angenommen, daß zusätzlich Teilnehmeranschluß- bzw. Portinformationen angegeben sind - sowie die Portinformationen in eine hierfür vorgesehene Port-Speichereinrichtung PSP eingetragen. Zusätzlich werden mit Hilfe der Hauptroutine MR nach einem in einer Subroutine auftretenden Fehler entsprechende Fehlermeldungen gebildet und an eine Fehlerbehandlungsroutine FR weitergeleitet.

Die beispielsweise auf einer Floppy Disk gespeicherten, die protokollierten Informationen repräsentierenden Kodewörter werden über eine Standardeingangsschnittstelle SIN sowohl an die Hauptroutine MR als auch an eine Eingangsroutine ER geführt. Mit Hilfe der Eingangsroutine ER werden die in der Eingangsdatei hinterlegten Kodewörter zyklisch in einen Eingangsspeicher ES gelesen. Hierbei werden die ankommenden Informationen mit Hilfe eines Kodewortmusters im Sinne einer ersten Kodeworterkennung überprüft. Die im Eingangsspeicher ES hinterlegten Kodewörter - z. B. im ASCII-Kode - werden mit Hilfe der Eingangsroutine ER umkodiert - z. B. Hexkode - und an eine Warteschlangenroutine WR übermittelt. Diese Warteschlangenroutine WR wird vom jeweils vorhandenen Betriebssystem eines Personal Computers bzw. eines Kommunikationssystems verwaltet.

Die Hauptroutine MR steht des weiteren mit einer Selektionsroutine SR in Verbindung. Mit Hilfe dieser Selektionsroutine SR werden aus der in der Warteschlangenroutine WR gebildeten Warteschlange diejenigen Kodewörter selektiert, deren Portinformation sowie Ursprungs- bzw. Zielinformation mit den im Parameterspeicher PSP hinterlegten Ursprungs-, Ziel- und Portinformationen übereinstimmen. Zusätzlich - sofern an der betreffenden Eingabeeinrichtung eingegeben - sind Kodewörter selektierbar, deren Ursprungs- bzw. Ziel- und Portinformationen nicht im Parameterspeicher hinterlegt sind, jedoch deren Ursprungs- bzw. Ziel- und Portinformationen zusammen mit im Parameterspeicher PSP hinterlegten Ziel- bzw. Ursprungs- und Portinformationen in bereits selektierten Kodewörtern festgestellt wurden. Die Selektierung kann beispielsweise für fünf unterschiedliche Ports für jeweils zwei unterschiedliche Programme durchgeführt werden.

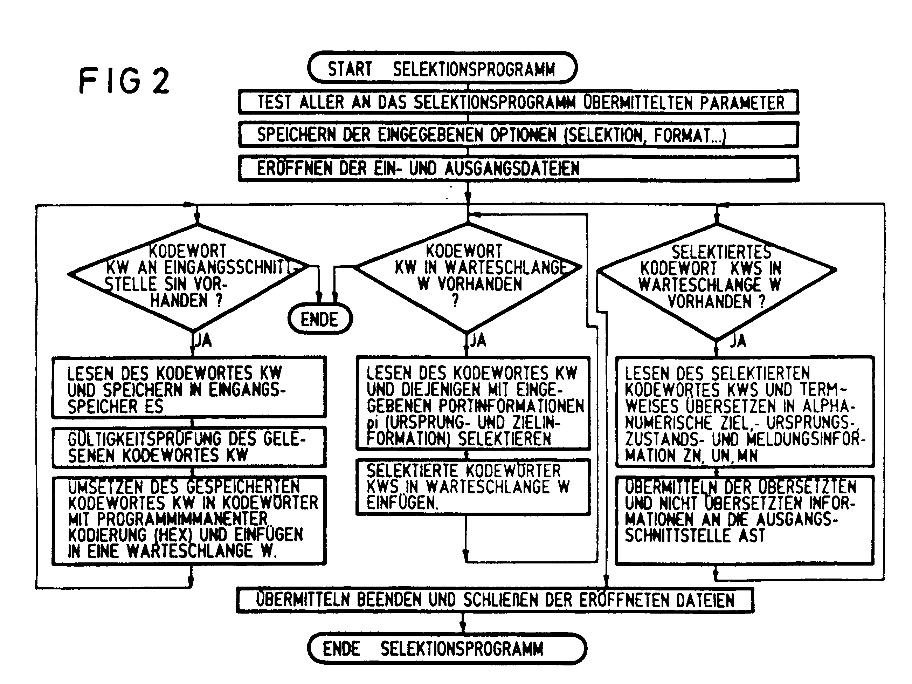

Die selektierten Kodewörter werden anschließend mit Hilfe einer Ausgangsroutine AR bearbeitet. Hierbei werden bestimmte Terme der Kodewörter - z. B. die Terme: Ursprungs-, Ziel- und Portinformationen sowie die Meldungs- und Zustandsinformationen - in mnemonische, bedienerverständlichere Informationen umgesetzt. Diese Umsetzung wird mit Hilfe einer Mnemotabelle MT durchgeführt. Hierbei werden bei Auftreten vorgegebener kodierter Terme die zugeordneten Speicherplätze der Mnemotabelle MT gelesen und über eine Ausgangsschnittstelle AST an eine nicht dargestellte Anzeigeeinrichtung - beispielsweise eine Bildschirmeinrichtung einer Bedieneinrichtung - im Sinne einer Visualisierung der umgesetzten Informationen übermittelt. FIG 2 zeigt ein im wesentlichen sich selbst erläuterndes Ablaufdiagramm des erfindungsgemäßen Verfahrens. Anhand dieses Ablaufdiagrammes sind die zeitlichen Reihenfolgen der Abläufe der in FIG 1 erläuterten Haupt-, Eingangs-, Selektions- und Ausgangsroutine MR, ER, SR, AR dargestellt.

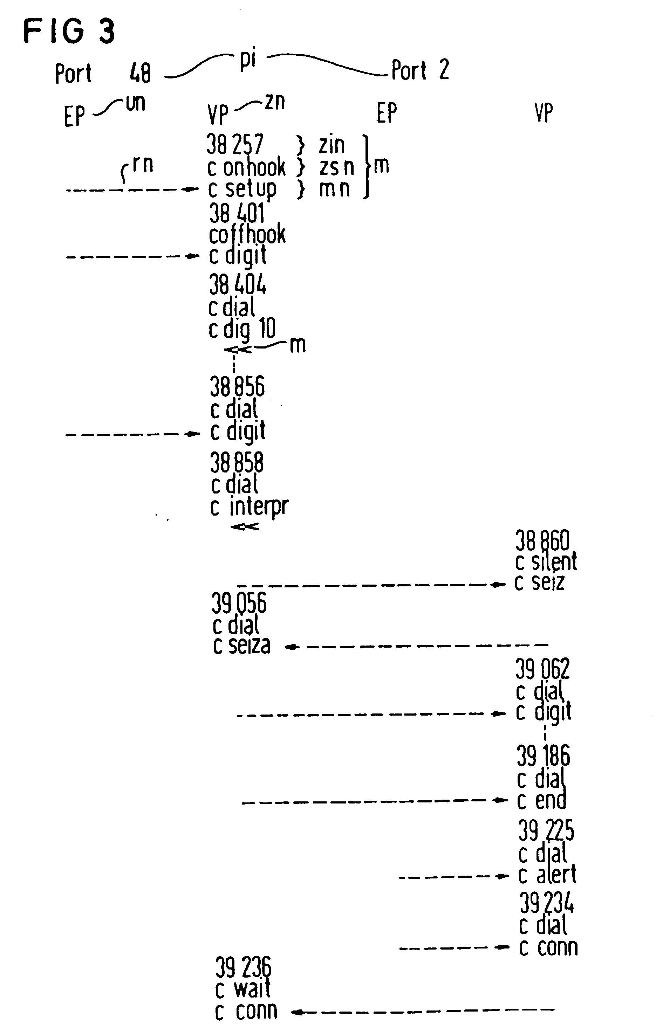

In FIG 3 sind beispielhaft die protokollierten, nach dem erfindungsgemäßen Verfahren umgesetzten Informationen dargestellt, die für einen Verbindungsaufbau von einem Teilnehmeranschluß bzw. Port 48 zu einem Teilnehmeranschluß bzw. Port 2 an einer Anzeigeeinrichtung eines Personal Computers oder einer Bedieneinrichtung eines Kommunikationssystems angezeigt werden. In FIG 3 sind der Teilnehmeranschluß 48 und 2 durch die Portinformation pi Port 48 und Port 2 angezeigt. Für das Ausführungsbeispiel sei des weiteren angenommen, daß der protokollierte Meldungsfluß zwischen einem Endgeräteprogramm und einem Vermittlungsprogramm mit Hilfe des erfindungsgemäßen Verfahrens umgesetzt und dargestellt werden soll. Das Endgeräte- und Vermittlungsprogramm ist in FIG 3 durch die mnemonischen Informationen EP, VP dargestellt, wobei dem Endgeräteprogramm EP die Ursprungsinformation un und dem Vermittlungsprogramm VP die Zielinformation zn - repräsentiert auf den zu betrachtenden Meldungsfluß das Zielprogramm - zugeordnet ist. Desweiteren sind in FIG 3 nur die am Endgeräte- bzw. Vermittlungsprogramm ankommenden Meldungen m aufgezeigt. Hierbei wird jede Übermittlung einer Meldung m durch eine Zeitinformation zin, eine Zustandsinformation zsn, eine Meldungsinformation mn und eine Richtungsinformation rn dargestellt. Durch die Richtungsinformation rn kann sowohl ein Meldungsfluß zwischen den Programmodulen EP, VP als auch in einem Programm EP, VP angezeigt werden. Die Zeitinformation zin ist in Millisekunden ausgehend vom Aufzeichnungsbeginn angegeben. Den in FIG 3 angegebenen mnemonischen Informationen sind folgende Bedeutungen zugeordnet:
- c:: Vermittlungsprogramm
- onhook:: Ruhezustand (Handapparat nicht abgehoben)
- offhook:: Aktivzustand (Teilnehmer hat Handapparat abgehoben)
- dial:: Wählzustand
- wait:: Wartezustand
- silent:: Ruhezustand (bezogen auf eine Verbindungsleitung)
- setup:: Verbindungsaufbauanforderungsmeldung
- digit:: Wählziffer
- diglO:: Meldung, daß bis zu 10 Wählziffern empfangen werden
- interpr:: Meldung an die interne Wahlbewertungseinrichtung
- seiz:: Belegung
- seiza:: Belegungsquittung
- end:: Wahlende
- alert:: Meldung, daß Rufsignale an gerufenen Teilnehmer übermittelt werden
- conn:: Meldung, daß gerufener Teilnehmer Hörapparat abgehoben hat und durchverbunden werden konnte.

Durch diese mnemonischen Informationen und die graphische Anzeige der Richtungsinformationen rn sind die durch ein Protokollprogramm protokollierten, kodierten Informationen einfach und damit zeitsparend interpretierbar.

## Patentansprüche

1. Verfahren zur Visualisierung von vermittlungstechnischen, protokollierten Informationen über den Ablauf von in einem Kommunikationssystem eingesetzten vermittlungstechnischen Programmen, wobei die protokollierten Informationen mit Hilfe eines betriebstechnischen Protokollprogrammoduls durch jeweils einen Programmschritt protokollierende Kodewörter gebildet werden,
**dadurch gekennzeichnet,**
- daß aus den protokollierten Kodewörtern (KW) diejenigen Kodewörter (KWS) selektiert werden, die aufgrund von in vorgegebenen Ursprungsprogrammen und vorgegebenen Zielprogrammen ablaufenden Programmschritten gebildet werden,
- daß vorgegebene kodierte Terme eines selektierten Kodewortes
-- in eine das jeweilige Ursprungs- oder Zielprogramm repräsentierende, mnemonische Ziel- oder Ursprungsinformation (un, zn),
-- in eine den vermittlungstechnischen Zustand des Ursprungs- und/oder Zielprogramms repräsentierende, mnemonische Zustandsinformation (zsn), oder
-- in eine eine vermittlungstechnische Meldung repräsentierende mnemonische Meldungsinformation (mn)
umgesetzt werden,
- daß durch Auswerten der Ursprungs- und Zielinformationen (un, zn) in einem selektierten Kodewort (KWS) eine den Meldungsfluß anzeigende Richtungsinformation (rn) gebildet wird, und
- daß die Ziel- und Ursprungsinformation (un, zn) sowie die Meldungs-, Zustands- und Richtungsinformationen (mn, zsn, rn) und nicht umgesetzte Terminformationen (zin) im Sinne einer Visualisierung an eine Anzeigeeinrichtung übermittelt werden, wobei die Richtungsinformation (rn) derart an die Anzeigeeinrichtung gesteuert wird, daß eine interne oder die Übermittlungsrichtung der von der Ursprungsinformation (un) zu der Zielinformation (zn) übermittelten Meldungsinformation (mn) graphisch angezeigt wird.

2. Verfahren nach Anspruch 1,
**dadurch gekennzeichnet,**
daß zusätzlich diejenigen Kodewörter (KWS) selektiert werden, deren protokollierte, nicht vorgegebene Ursprungs- oder Zielinformationen (un, zn) zusammen mit vorgegebenen Ziel- oder Ursprungsinformationen (un, zn) in den selektierten Kodewörtern (KWS) protokolliert wurden.

3. Verfahren nach Anspruch 1 oder 2,
**dadurch gekennzeichnet,**
daß zusätzlich zur Ursprungs- oder Zielinformation (un, zn) eine numerische, Teilnehmeranschlüsse des Kommunikationssystems repräsentierende Teilnehmeranschlußinformation (pi) vorgebbar ist.

4. Verfahren nach einem der vorhergehenden Ansprüche,
**dadurch gekennzeichnet,**
daß jeweils gleiche Ursprungs- bzw. Zielinformationen (un, zn) sowie die zugeordneten Zustands-, Meldungs- und Teilnehmeranschlußinformationen (zsn, mn, pi) derart an die Anzeigeeinrichtung gesteuert werden, daß diese spaltenweise angezeigt werden.

5. Verfahren nach einem der vorhergehenden Ansprüche,
**dadurch gekennzeichnet,**
daß mit Hilfe einer programmgesteuerten Hauptroutine (MR) eine programmgesteuerte Eingangsroutine (ER), eine programmgesteuerte Selektionsroutine (SR) und eine programmgesteuerte Ausgangsroutine (AR) gesteuert und überwacht wird,
daß durch die Eingangsroutine (ER) die Kodewörter (KW) zyklisch in einen Eingangsspeicher (ES) gelesen und überprüft sowie umkodiert und in eine von einer Warteschlangenroutine (WR) gesteuerte Warteschlange eingefügt werden,
daß durch die Selektionsroutine (SR) die Kodewörter (KWS) aus der Warteschlange mit vorgegebenen Ursprungs- und/oder Zielinformationen (un, zn) selektiert werden und daß durch die Ausgangsroutine (AR) vorgegebene Terme der selektierten Kodewörter (KWS) in mnemonische Informationen (pi, zn, un, zsn, mn) und in Richtungsinformationen (rn) umgesetzt an eine Anzeigeeinrichtung gesteuert werden.

## Claims

1. Method of visually representing logged switching information items on the running of switching programs used in a communication system, the logged information items being formed with the aid of an administration and maintenance trace program module by means of code words respectively logging a program step, characterized
- in that from the logged code words (KW) those code words (KWS) which are formed on the basis of program steps running in prescribed originating programs and prescribed destination programs are selected,
- in that prescribed coded terms of a selected code word are converted
-- into a mnemonic destination or originating information item (un, zn), representing the respective originating or destination program
-- into a mnemonic status information item (zsn), representing the switching status of the originating and/or destination program, or
-- into a mnemonic message information item (mn), representing a switching message,
- in that, by evaluating the originating and destination information items (un, zn) in a selected code word (KWS), a directional information item (rn), indicating the message flow, is formed, and
- in that the destination and originating information items (un, zn) and also the message, status and directional information items (mn, zsn, rn) and unconverted term information items (zin) are transmitted for the purpose of visual representation to a display device, the directional information item (rn) being passed to the display device in such a controlled manner that an internal transmission direction or the transmission direction of the message information item (mn) transmitted from the originating information item (un) to the destination information item (zn) is graphically displayed.

2. Method according to Claim 1, characterized in that, in addition, those code words (KWS) whose logged, unprescribed originating or destination information items (un, zn) were logged together with prescribed destination or originating information items (un, zn) in the selected code words (KWS) are selected.

3. Method according to Claim 1 or 2, characterized in that, in addition to the originating or destination information item (un, zn), a numerical subscriber-line information item (pi), representing subscriber lines of the communication system, can be prescribed.

4. Method according to one of the preceding claims, characterized in that respectively identical originating or destination information items (un, zn) and also the assigned status, message and subscriber-line information items (zsn, mn, pi) are passed to the display device in such a controlled manner that they are displayed column by column.

5. Method according to one of the preceding claims, characterized in that a program-controlled input routine (ER), a program-controlled selection routine (SR) and a program-controlled output routine (AR) are controlled and monitored with the aid of a program-controlled main routine (MR), in that the code words (KW) are cyclically read into an input memory (ES) and are checked and are also recoded and inserted into a queue, controlled by a queue routine (WR), by the input routine (ER), in that the code words (KWS) are selected from the queue with prescribed originating and/or destination information items (un, zn) by the selection routine (SR) and in that prescribed terms of the selected code words (KWS), converted into mnemonic information items (pi, zn, un, zsn, mn) and into directional information items (rn), are passed in a controlled way to a display device by the output routine (AR).

## Revendications

1. Procédé de visualisation d'informations de commutation dépistées et concernant le déroulement de programmes de commutation utilisés dans un système de communication, dans lequel on forme les informations dépistées à l'aide d'un module de programme de dépistage et d'exploitation par des mots de code dépistant une étape de programme,
caractérisé en ce que
- on sélectionne parmi les mots (KW) de code dépistés les mots (KWS) de code, qui sont formés sur la base d'étapes se déroulant dans des programmes d'origine prescrits et dans des programmes de destination prescrits,
- on convertit des termes prescrits codés d'un mot de code sélectionné
-- en une information (un, zn) de destination ou d'origine, mnémonique et représentant le programme respectif d'origine ou de destination,
-- en une information (zsn) d'état mnémonique et représentant l'état de commutation du programme d'origine et/ou de destination, ou
-- en une information (mn) de message mnémonique représentant un message de commutation,
- on forme, en exploitant les informations (un, zn) d'origine et de destination dans un mot (KWS) de code sélectionné, une information (rn) de direction indiquant le passage d'un message, et
- on transmet l'information (un, zn) de destination et d'origine ainsi que les informations (mn, zsn, rn) de message, d'état et de direction et des informations (zin) de terme non converties en vue d'une visualisation sur un dispositif d'affichage, l'information (rn) de direction étant commandée sur le dispositif d'affichage, de telle sorte qu'une direction interne de transmission ou la direction de transmission de l'information (mn) de message transmise de l'information (un) d'origine à l'information (zn) de destination, soit représentée graphiquement.

2. Procédé suivant la revendication 1,
caractérisé en ce que
on sélectionne en supplément ceux des mots (KWS) de code, dont les informations (un, zn) d'origine ou de destination non prescrites dépistées ont été dépistées conjointement avec des informations (un, zn) prescrites de destination ou d'origine dans les mots (KWS) de code sélectionnés.

3. Procédé suivant la revendication 1 ou 2,
caractérisé en ce que
on peut prescrire, en plus de l'information (un, zn) d'origine ou de destination, une information (pi) numérique de raccordement d'abonné représentant des raccordements d'abonnés du système de communication.

4. Procédé suivant l'une des revendications précédentes,
caractérisé en ce que
on commande des informations (un, zn) identiques d'origine ou de destination ainsi que les informations (zsn, mn, pi) associées l'état, de message et de raccordement d'abonnés dans le dispositif d'affichage, de sorte à afficher celles-ci par colonnes.

5. Procédé suivant l'une des revendications précédentes,
caractérisé en ce que
on commande et on contrôle, à l'aide d'une routine principale (MR) commandée par programme, une routine (ER) d'entrée commandée par programme, une routine (SR) de sélection commandée par programme et une routine (AR) de sortie commandée par programme,
on lit, on vérifie et on recode cycliquement dans une mémoire (ES) d'entrée les mots (KW) de code par la routine (ER) d'entrée et on les insère dans une file d'attente commandée par une routine (WR) de file d'attente,
on sélectionne, par la routine (SR) de sélection, les mots (KWS) de code dans la file d'attente par des informations (un, zn) prescrites d'origine et/ou de destination,
on convertit des termes, prescrits par la routine (AR) de sortie, des mots (KWS) de code sélectionnés en informations mnémoniques (pi, zn, un, zsn, mn) et en informations (rn) de direction et on les commande dans un dispositif d'affichage.
